# EUROPÄISCHE PATENTANMELDUNG

(11) **EP 2 554 445 A2**
(43) Veröffentlichungstag der Anmeldung: **06.02.2013**
(21) Anmeldenummer: 12170964.6
(22) Anmeldetag: 06.06.2012
(51) Int. Cl.: B60T 8/40, F04B 1/04

(54) **Führungsring eines Pumpenelements einer Fahrzeugbremsanlage**

(30) Priorität: 01.08.2011 DE 102011080184
(71) Anmelder: ROBERT BOSCH GMBH, 70442 Stuttgart (DE)
(72) Erfinder: Gaertner, Oliver, 74232 Abstatt (DE); Schuller, Wolfgang, 74389 Cleebronn (DE)

(57) **Zusammenfassung**

Bei einem Führungsring (48) eines Pumpenelements (10) einer Fahrzeugbremsanlage zum Führen eines Kolbens (189 entlang seiner Längsachse in einem Zylinder (12), weist der Führungsring (48) in Richtung seiner Längserstreckung einen Mittelbereich (56) sowie mindestens einen Randbereich (58) auf und der mindestens eine Randbereich (58) ist in Bezug auf eine radiale Krafteinwirkung (F) elastischer gestaltet, als der Mittelbereich (56).

## Beschreibung

### Stand der Technik

Die Erfindung betrifft einen Führungsring eines Pumpenelements einer Fahrzeugbremsanlage zum Führen eines Kolbens entlang seiner Längsachse in einem Zylinder. Ferner betrifft die Erfindung die Verwendung eines solchen Führungsrings an einem Pumpenelement einer Fahrzeugbremsanlage.

Führungsringe der hier relevanten Art dienen zum Führen von Kolben an Kolbenpumpen. Vorliegend geht es insbesondere um das Führen von Kolben an Kolbenpumpen von Fahrzeugbremsanlagen, die mit einem oder mehreren Pumpenelementen versehen sind. Die einzelnen Pumpenelemente umfassen jeweils einen Kolben, der in Richtung seiner Längsachse in einem zugehörigen Zylinder geführt ist. Der Zylinder weist dazu innen eine Kolbenlauffläche auf, an der der Führungsring so ortsfest angeordnet ist, dass der Kolben mit seiner Mantelfläche an dem Führungsring entlang gleitet.

Die Kolbenpumpen werden in ABS/ESP-Hydraulikeinheiten der Fahrzeugbremsanlagen zur Förderung von Druckmitteln, insbesondere von Bremsfluid, innerhalb der Anlage benötigt. Sie umfassen außer dem Kolben und dem Zylinder ferner Einlass- und Auslassventile sowie Dichtelemente. Die Dichtelemente befinden sich teilweise neben den Führungsringen.

### Offenbarung der Erfindung

Erfindungsgemäß ist ein Führungsring eines Pumpenelements einer Fahrzeugbremsanlage zum Führen eines Kolbens entlang seiner Längsachse in einem Zylinder geschaffen, bei dem der Führungsring in Richtung seiner Längserstreckung einen Mittelbereich sowie mindestens einen Randbereich aufweist und der mindestens eine Randbereich in Bezug auf eine radiale Krafteinwirkung elastischer gestaltet ist, als der Mittelbereich.

Der Kern der Erfindung liegt in einer Führung des Kolbens innerhalb des Zylinders mit einer reduzierten Kanten- bzw. Randbelastung des zugehörigen Führungsrings. Diese reduzierte Randbelastung wird erzielt, indem der Randbereich des Führungsrings im Vergleich zu dessen Mittelbereich elastischer bzw. mit höherer Elastizität gestaltet ist. Der Mittelbereich des erfindungsgemäßen Führungsrings ist also steifer gestaltet, als mindestens einer seiner axialen Randbereiche.

Dieser Gestaltung geht der erfindungsgemäße Gedanke voraus, dass der Kolben in dem Zylinder in der Regel nicht genau entlang seiner Längsachse gleitet, sondern in dem Zylinder leicht schräg gestellt angeordnet ist. Diese leichte Schrägstellung ergibt sich dadurch, dass der Kolben an einer seiner Stirnseiten von einem Exzenter angetrieben wird, der dort eine Querkraft auf den Kolben ausübt.

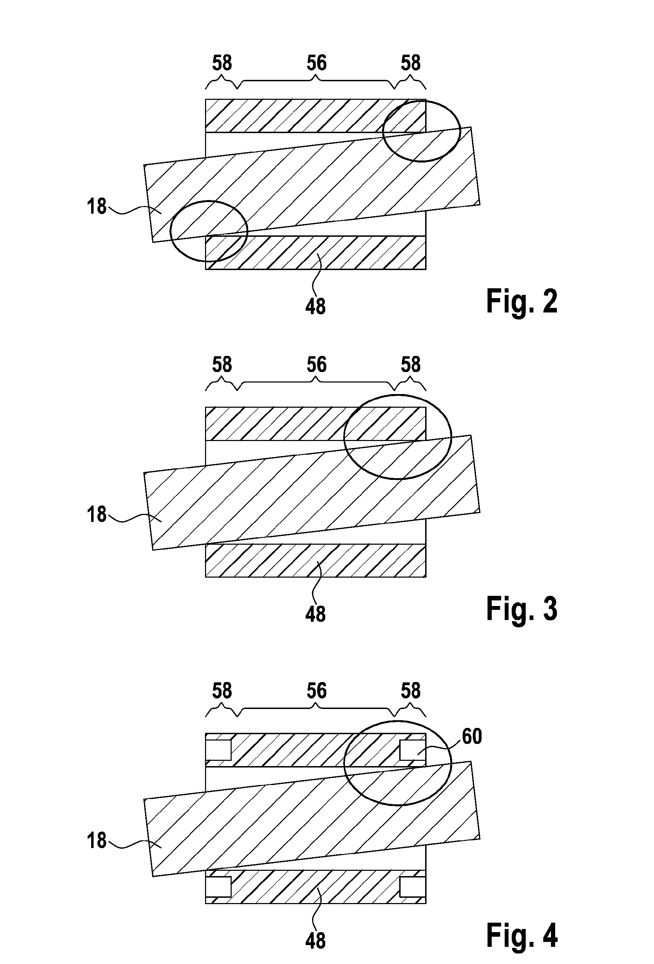

Die Längsachse des Kolbens steht also in einem (kleinen) Winkel zur Längsachse des Zylinders. Aufgrund dieser (leichten) Schrägstellung des Kolbens im Zylinder, liegt der Kolben nicht entlang der gesamten inneren Mantelfläche des Führungsrings an, sondern nur an dessen axialen Randbereichen (siehe auch Fig. 2).

Diese Randbereiche des Führungsrings sind erfindungsgemäß elastischer und damit nachgiebiger als der Mittelbereich gestaltet. Die höhere Elastizität führt zu einer weniger scharfen Kontaktkante zwischen Kolben und Führungsring, sozusagen zu einer Entschärfung des Randbereichs, und zu einer Verschiebung der Belastung des Führungsring hin zu dessen Mittelbereich. Aufgrund dieser Entschärfung des Randbereichs verschleißt der Führungsring weniger. Die Kanten des Führungsrings werden nachgiebiger, der Kolben wird im Führungsring besser geführt. Zugleich ist die Kontaktzone zwischen Kolben und Führungsring vergrößert, wodurch die Flächenpressung insbesondere an den Kanten des Führungsrings reduziert wird.

Aufgrund der erzielten Funktions- und Qualitätsverbesserungen führt diese Lösung im Vergleich zu bisher bekannten Lösungen insgesamt zu einer Kostenersparnis.

Der mindestens eine elastischere Randbereich ist vorzugsweise mittels einer im Vergleich zum Mittelbereich radial dünneren Gestaltung des Materials dieses Randbereichs ausgebildet.

Das dünnere Material führt dazu, dass sich der Führungsring in diesem Randbereich im Vergleich zum Mittelbereich stärker radial verformen kann und entsprechend einem radialen Krafteinfluss ausweichen kann. Eine stärkere Verformung des Führungsrings in seinem Randbereich kann alternativ oder zusätzlich dadurch erzielt werden, dass der zugehörige Zylinder am Randbereich ausreichend Raum für ein radiales Ausweichen des Führungsrings zur Verfügung stellt. Dieser Raum kann vorzugsweise mittels einer radialen Vergrößerung der den Führungsring aufnehmenden Bohrung erzielt werden.

Die radial dünnere Gestaltung des mindestens einen Randbereichs am Führungsring ist bevorzugt mittels einer stirnseitigen Einkerbung dieses Randbereichs gestaltet.

Eine solche "Entlastungskerbe" am Führungsring ist insbesondere vorteilhaft, wenn der Führungsring eine vergleichsweise große radiale Erstreckung aufweist. Die Einkerbung kann auf sehr einfache Weise in verschiedenen Größen ausgebildet werden, wodurch die Größe der gewünschten radialen Entlastung auf einfache Weise typbezogen angepasst werden kann.

Besonders bevorzugt ist die Einkerbung im Querschnitt V-förmig gestaltet.

Mit der V-Form weist die Einkerbung am äußeresten axialen Randbereich bzw. an der Stirnseite des Führungsrings eine größere radiale Breite auf, als axial weiter innen. Der Randbereich ist daher an seiner Stirnfläche im Vergleich zu weiter innen besonders elastisch.

Der mindestens eine elastischere Randbereich ist ferner alternativ oder vorteilhaft mittels eines Materials mit geringerem E-Modul gestaltet.

Derartiges Material kann mit steiferem Material im Mittelbereich durch einen Spritzgussprozess zu einem fertigen Führungsring verarbeitet werden.

Der mindestens eine Randbereich ist ferner bevorzugt mit einer am Kolben anliegenden Dichtlippe gestaltet

Mit der Dichtlippe ist vorteilhaft dem Führungsring zugleich eine weitere, nämlich eine abdichtende Funktion zugeordnet. Die Dichtlippe kann zugleich als Abstreifer wirken, indem ihr axial nach außen gewandtes Lippenende leicht konisch radial nach innen gerichtet ist.

Die Dichtlippe ist dabei vorzugsweise einstückig mit dem restlichen Führungsring hergestellt.

Diese einstückige Gestalt von Führungsring und Dichtlippe kann ebenfalls vorteilhaft mittels eines Spritzgießprozesses hergestellt werden.

Insgesamt ist die derartige Ausgestaltung eines Führungsrings besonders für ein Pumpenelement einer Fahrzeugbremsanlage angepasst.

Nachfolgend wird ein Ausführungsbeispiel der erfindungsgemäßen Lösung anhand der beigefügten schematischen Zeichnungen näher erläutert. Es zeigt:
- Fig. 1: einen Längsschnitt eines Pumpenelements mit einem ersten Ausführungsbeispiel eines erfindungsgemäßen Führungsrings,
- Fig. 2: den Führungsring gemäß Fig. 1 in vergrößertem Maßstab mit Erläuterung der Kantenbelastung am Führungsring,
- Fig. 3: die Ansicht gemäß Fig. 2 mit Erläuterung der erfindungsgemäßen Verbesserung,
- Fig. 4: die Ansicht gemäß Fig. 2 für ein zweites Ausführungsbeispiel eines erfindungsgemäßen Führungsrings,
- Fig. 5: einen Längsschnitt eines dritten Ausführungsbeispiels eines erfindungsgemäßen Führungsrings,
- Fig. 6: einen perspektivischen Längsschnitt des Führungsrings gemäß Fig. 5 und
- Fig. 7: einen Längsschnitt eines vierten Ausführungsbeispiels eines erfindungsgemäßen Führungsrings.

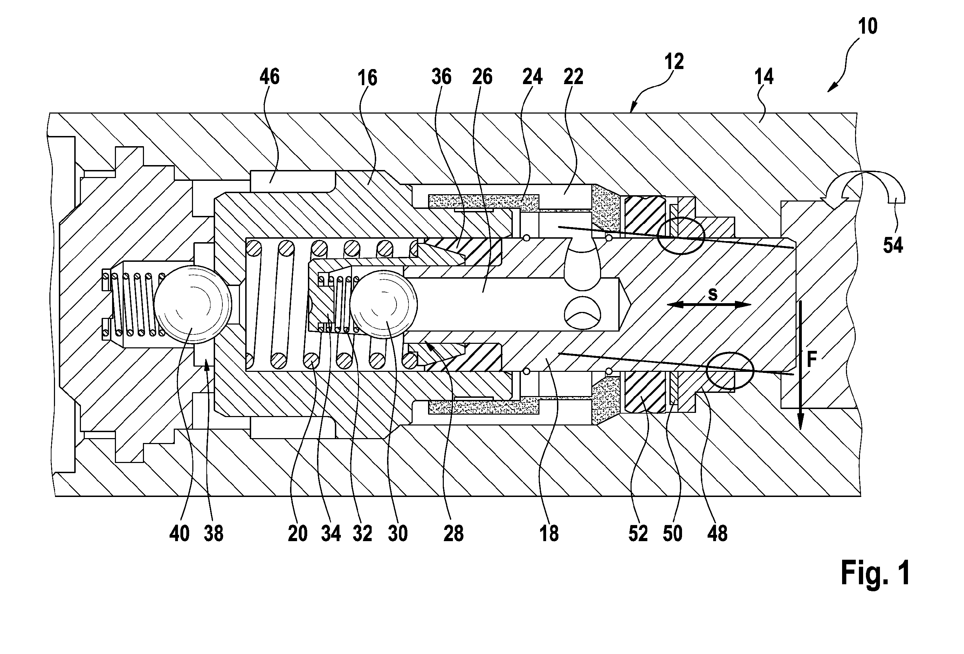

In Fig. 1 ist ein Pumpenelement 10 einer Fahrzeugbremsanlage dargestellt, das zum Fördern von Bremsfluid innerhalb der Fahrzeugbremsanlage dient. Das Pumpenelement 10 umfasst dazu einen Zylinder 12, der aus einem Pumpengehäuse 14 und einer darin angeordneten, hohlzylindrischen Zylinderhülse 16 gebildet ist.

In dem Zylinder 12 ist ein im Wesentlichen kreiszylindrischer Kolben 18 entlang seiner Längsachse hin und her bewegbar. Der Kolben 18 stützt sich dabei stirnseitig an einer schraubenförmigen Kolbenfeder 20 ab und ist von einem Einlass 22 mit einem zugeordneten Einlassfilter 24 umgeben. In dem Kolben 18 ist eine mit dem Einlass 22 in fluidleitender Verbindung stehende Einlassbohrung 26 ausgebildet, die einströmendes Bremsfluid zu einem Einlassventil 28 führt.

Das Einlassventil 28 ist mit einem Ventilkörper 30 gebildet, der von einer Ventilfeder 32 vorgespannt ist, welche sich in einem Ventilkäfig 34 befindet.

Der Kolben 18 ist zur Zylinderhülse 16 hin mit einem Dichtring 36 abgedichtet, so dass der Kolben 18 bei seiner Bewegung gegen die Kolbenfeder 20 Bremsfluid in Richtung zu einem Auslassventil 38 drängt. Das Auslassventil 38 ist mit einem Ventilkörper 40 und einer Ventilfeder 42 gebildet, die sich an einem Deckel 44 abstützt. Das derart durch das Auslassventil 38 geförderte Bremsfluid verlässt das Pumpenelement 10 durch einen Auslass 46.

Der Kolben 18 ist im Pumpengehäuse 14 des Zylinders 12 mittels eines im Querschnitt L-förmigen Führungsrings 48 in Richtung seiner Längsachse geführt. In Längsrichtung des Kolbens 18 befindet sich neben dem Führungsring 48 ein radial gerichteter Stützring 50 und ein im Querschnitt im Wesentlichen rechteckiger Dichtring 52.

Der Führungsring 48 dient dazu den Kolben 18 im Hinblick auf dessen axiale Hin- und Herbewegung über jeweils einen Weg S zu führen. Der Kolben 48 ist für diese Bewegung mittels eines Exzenters 54 (nur dessen Drehbewegung ist in Fig. 1 dargestellt) angetrieben und unterliegt daher während seiner Längsbewegung einer Querkraft F. Diese Querkraft F führt dazu, dass der Kolben 18 grundsätzlich in dem Führungsring 48 leicht schräg positioniert wird und mit seiner Mantelfläche nicht mehr vollständig an der inneren Mantelfläche des Führungsrings 48 anliegt (siehe Fig. 2). Dieses Schrägstellen des Kolbens 18 ist in Fig. 1 mit stark schräg gestellten Linien am Kolben 18 nochmals verdeutlicht.

Aufgrund dieser Schrägstellung des Kolbens 18 kommt es am Führungsring 48 zu einer ungleichmäßigen Belastung von dessen axialem Mittelbereich 56 im Vergleich zu dessen axialen Randbereichen 58. Während jeder Randbereich 58 an einer Stelle seines Umfangs stark belastet wird, wird der Mittelbereich 56 des Führungsrings 48 entlastet (siehe Fig. 2).

Um bei dieser Belastung des Führungsrings 48 die Kanten- bzw. Randbelastung des Führungsrings 48 zu reduzieren, ist der Randbereich 58 bei dem Führungsring 48 gemäß Fig. 1, 2 und 3 mit einem im Vergleich zum Mittelbereich 56 elastischeren Material gestaltet. Das elastischere Material des Randbereichs 58 ist mit dem steiferen Material des Mittelbereichs 56 mittels eines Spritzgießvorgangs einstückig hergestellt worden. Der Mittelbereich 56 des Führungsrings 48 ist also steifer gestaltet, als dessen beiden axialen Randbereiche 58.

Die höhere Elastizität der Randbereiche 58 führt zu einer weniger scharfen Kontaktkante zwischen Kolben 18 und Führungsring 48 und zu einer Verschiebung der Belastung des Führungsring 48 hin zu dessen Mittelbereich 56. Aufgrund dieser Entschärfung der Randbereiche 58 verschleißen diese weniger. Zugleich ist die Kontaktzone zwischen dem Kolben 18 und dem Führungsring 48 vergrößert, wodurch die Flächenpressung insbesondere an den Kanten des Führungsrings 48 reduziert wird.

Bei dem Ausführungsbeispiel gemäß Fig. 4 ist der elastischere Randbereich 58 am Führungsring 48 mittels einer im Querschnitt rechteckigen, stirnseitigen Einkerbung 60 geschaffen. Die Einkerbung 60 führt dazu, dass der Randbereich 58 im Vergleich zum Mittelbereich 56 radial dünner und daher in Bezug auf eine Querkraftbelastung nachgiebiger ist.

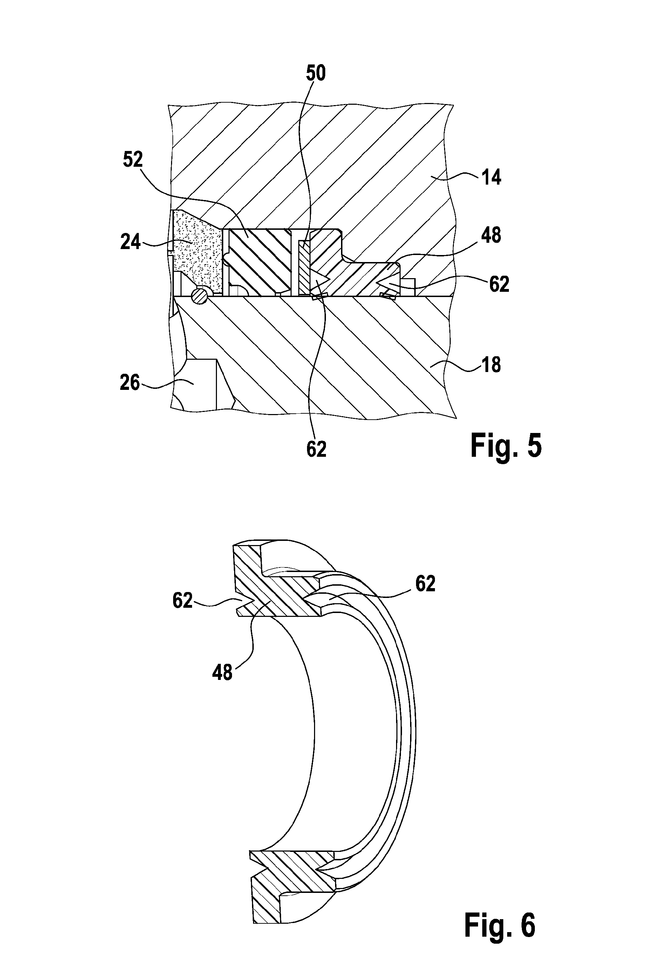

Das Ausführungsbeispiel gemäß den Fig. 5 und 6 zeigt am Führungsring 48 eine stirnseitige Einkerbung 62, die im Querschnitt V-förmig gestaltet ist. Diese Ausgestaltung führt zu einem axial nach außen hin immer dünner werdenden Randbereich 58, der zusätzlich als Abstreifer von Bremsfluid am Kolben 18 wirkt.

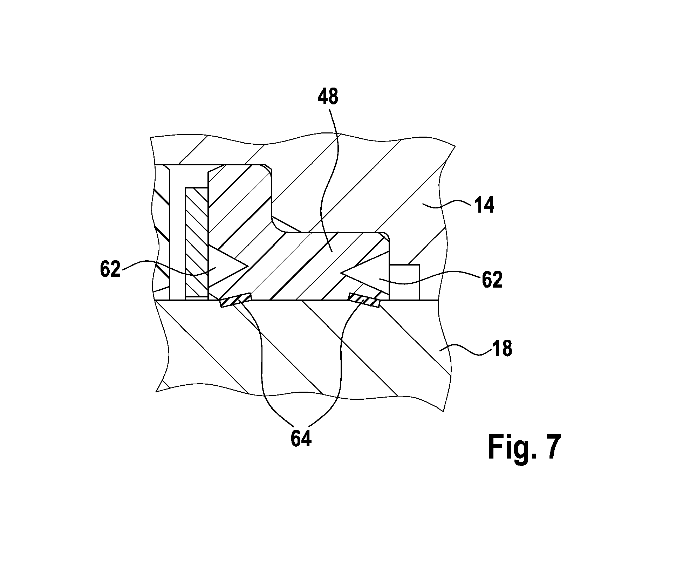

Bei dem Ausführungsbeispiel gemäß Fig. 7 ist schließlich an dem Randbereichen 58 des Führungsrings 48 im Bereich von dessen V-förmiger Einkerbungen 62 jeweils eine am Kolben 18 anliegende Dichtlippe 64 mit eingespritzt. Die Dichtlippe 64 ordnet dem Führungsring 48 neben dessen Führungsfunktion zugleich eine Dichtfunktion zu.

## Patentansprüche

1. Führungsring (48) eines Pumpenelements (10) einer Fahrzeugbremsanlage zum Führen eines Kolbens (18) entlang seiner Längsachse in einem Zylinder (12),
bei dem der Führungsring (48) in Richtung seiner Längserstreckung einen Mittelbereich (56) sowie mindestens einen Randbereich (58) aufweist und der mindestens eine Randbereich (58) in Bezug auf eine radiale Krafteinwirkung (F) elastischer gestaltet ist, als der Mittelbereich (56).

2. Führungsring nach Anspruch 1,
bei dem der mindestens eine elastischere Randbereich (58) mittels einer im Vergleich zum Mittelbereich (56) radial dünneren Gestaltung des Materials dieses Randbereichs (58) ausgebildet ist.

3. Führungsring nach Anspruch 2,
bei dem die radial dünnere Gestaltung mittels einer stirnseitigen Einkerbung (60; 62) dieses Randbereichs (58) gestaltet ist.

4. Führungsring nach Anspruch 3,
bei dem die Einkerbung (62) im Querschnitt V-förmig gestaltet ist.

5. Führungsring nach einem der Ansprüche 1 bis 4,
bei dem der mindestens eine elastischere Randbereich (58) mittels eines Materials mit geringerem E-Modul gestaltet ist.

6. Führungsring nach einem der Ansprüche 1 bis 5,
bei dem der mindestens eine Randbereich (58) ferner mit einer am Kolben (18) anliegenden Dichtlippe (64) gestaltet ist

7. Führungsring nach Anspruch 6,
bei dem die Dichtlippe (64) einstückig mit dem restlichen Führungsring (48) hergestellt ist.

8. Pumpenelements (10) einer Fahrzeugbremsanlage mit einem Führungsring (48) nach einem der Ansprüche 1 bis 7.
